# EUROPEAN PATENT APPLICATION

(11) **EP 4 530 887 A1**
(43) Date of publication of application: **02.04.2025**
(21) Application number: 24202429.7
(22) Date of filing: 25.09.2024
(51) Int. Cl.: G06F 16/58

(54) **CONTEXTUAL IMAGE GENERATION IN MESSAGING APPLICATIONS**

(30) Priority: 26.09.2023 US 202363585552 P; 19.09.2024 US 202418890451
(71) Applicant: Meta Platforms, Inc., Menlo Park, CA 94025 (US)
(72) Inventor: Salem, Hadi Michel, Menlo Park (US); Borror, Nathan, Menlo Park (US); Mun, Aran, Menlo Park (US); Cheung, Vincent Charles, Menlo Park (US)
(74) Representative: Murgitroyd & Company

(57) **Abstract**

A system or method for contextual image generation in messaging applications may include textual input being analyzed using natural language processing to determine an intent to generate an image without requiring an explicit command. An image may be generated based on the determined intent and conversation context, then displayed within the messaging application. The system supports collaborative image refinement, allowing multiple users in a group chat to modify and animate generated images through natural language interactions. A suggestion mechanism may be employed to maintain user control over image generation.

## Description

### TECHNOLOGICAL FIELD

The present disclosure relates generally to artificial intelligence-based image generation, and more specifically to systems and methods for contextually generating and manipulating images within messaging applications.

### BACKGROUND

The rapid advancement of artificial intelligence and natural language processing has revolutionized digital communication. Messaging applications, ubiquitous in modern society, have become platforms for rich, multimedia interactions. However, the integration of Al-powered content generation within these applications remains limited, often requiring users to switch between multiple tools or use complex commands to create and share visual content.

### SUMMARY

The disclosed subject matter provides systems and methods for contextual image generation and manipulation within messaging applications. By leveraging natural language processing and advanced image generation models, the subject matter enables creation, modification, or animation of custom visual content through natural conversational interactions.

According to a first aspect, there is provided a method comprising: receiving a textual input associated with a user profile in a messaging application; analyzing the textual input to determine an intent to generate media content; generating the media content based on the determined intent and content of the textual input; and displaying the generated media content within the messaging application.

The analyzing of the textual input may comprise evaluating a conversation history between the user profile and an artificial intelligence assistant.

The intent to generate the media content may be determined without an explicit command from the user to generate the media content.

The analyzing of the textual input may comprise determining one or more keywords associated with media content generation.

The method may further comprise: receiving a subsequent textual input associated with animating the generated media content; generating an animated version of the generated media content based on the subsequent textual input; and displaying the animated version within the messaging application.

The method may further comprise modifying of the generated media content based on changing one or more visual attributes of the generated media content.

The method may further comprise: receiving a subsequent textual input associated with modifying the generated media content; generating a modified media content based on the subsequent textual input; and displaying the modified media content within the messaging application.

Generating of the media content may be performed using one or more multiple media content generation models selected based on the determined intent.

The method may further comprise: prior to the displaying the generated media content, providing one or more suggestion messages that indicates a suggestion to generate media content based on the textual input in the messaging application; and receiving user approval to generate and display the media content.

The user approval may comprise receiving two or more votes to approve.

The textual input may be received in a group chat session. The generated media content may be displayed to multiple users in the group chat session.

According to a second aspect, there is provided an apparatus comprising: one or more processors; and at least one memory storing instructions, that when executed by the one or more processors, cause the apparatus to carry out the method of the first aspect.

According to a third aspect, there is provided a computer-readable medium storing instructions that, when executed by a processor, cause the processor to carry out the method of the first aspect. The medium may be non-transitory.

According to a fourth aspect, there is provided a computer program product comprising instructions which, when the program is executed by a computer, cause the computer to carry out the method of the first aspect.

The method, apparatus and/or computer-readable medium may facilitate determining the intent to generate an image without requiring an explicit command from the user device. Instead, the method, apparatus and/or computer-readable medium may facilitate analyzing of the conversation context and user input to infer when (e.g., in an instance in which) image generation may enhance the communication. This may allow for a more natural integration of visual content creation within messaging flows. After an initial image is generated, subsequent textual input may be provided to modify various attributes of the image or create animated versions. This enables an iterative, conversation-driven approach to visual content creation that may not be previously possible in messaging applications.

To further enhance the collaborative nature of the example aspects of the present disclosure, generated images may be shared and manipulated within group chat contexts. Multiple users may contribute to the refinement and evolution of generated images, fostering creative exchanges and shared experiences. Users may gain the ability to express themselves visually without disrupting conversational flow, while also unlocking possibilities for creative collaboration.

Additional advantages will be set forth in part in the description which follows or may be learned by practice. The advantages will be realized and attained by the elements or combinations particularly pointed out in the appended claims. It is to be understood that both the foregoing general description and the following detailed description are exemplary and explanatory only and are not restrictive, as claimed.

### DESCRIPTION OF THE DRAWINGS

FIG. 1 illustrates an exemplary system for contextually generating and manipulating images within messaging applications.
FIG. 2 illustrates an example application interface on a user device associated with the disclosed subject matter.
FIG. 3 illustrates an example application interface on a user device associated with the disclosed subject matter.
FIG. 4A illustrate an example application interface on a user device associated with the disclosed subject matter.
FIG. 4B illustrate an example application interface on a user device associated with the disclosed subject matter.
FIG. 4C illustrate an example application interface on a user device associated with the disclosed subject matter.
FIG. 4D illustrate an example application interface on a user device associated with the disclosed subject matter.
FIG. 5 illustrates an example user interface for implementing the contextual image generation system.
FIG. 6 illustrates an example method for generating images based on conversational context in messaging applications.
FIG. 7 illustrates an example method for collaborative image generation and manipulation in group chat sessions.
FIG. 8 illustrates a machine learning and training model in accordance with various examples of the present disclosure.
FIG. 9 illustrates an example block diagram of an exemplary computing device suitable for implementing aspects of the disclosed subject matter.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present invention will now be described more fully hereinafter with reference to the accompanying drawings, in which some, but not all examples of the invention are shown. Various examples of the invention may be embodied in many different forms and should not be construed as limited to the examples set forth herein. Like reference numerals refer to like elements throughout.

It is to be understood that the methods and systems described herein are not limited to specific methods, specific components, or to particular implementations. It is also to be understood that the terminology used herein is for the purpose of describing particular examples only and is not intended to be limiting.

Generally, messaging platforms may limit visual expression to predefined assets, such as emojis, stickers, or Graphics Interchange Format (GIF) images. These assets often become outdated quickly, present challenges in searching or organization, or offer minimal opportunities for customization, creative control, or collaborative efforts. Users frequently find themselves constrained by the limited options available, unable to fully express their ideas or emotions through visual means within the context of their conversations.

Additionally, some systems often require users to exit the messaging application or use separate tools to create custom visual content. This may disrupt the natural flow of conversation and create friction in the user experience. Furthermore, the lack of integration between image creation tools and messaging platforms may hinder collaborative creativity and real-time visual communication.

By leveraging natural language processing and advanced image generation models, the disclosed subject matter enables the creation, modification, or animation of custom visual content through natural conversational interactions (e.g., voice or text). In one aspect, a method is provided for generating images based on contextual analysis of messaging conversations. The method includes receiving textual input associated with a user in a messaging application, analyzing the textual input to determine an intent to generate an image, generating an image based on the determined intent and content of the textual input, and displaying the generated image within the messaging application.

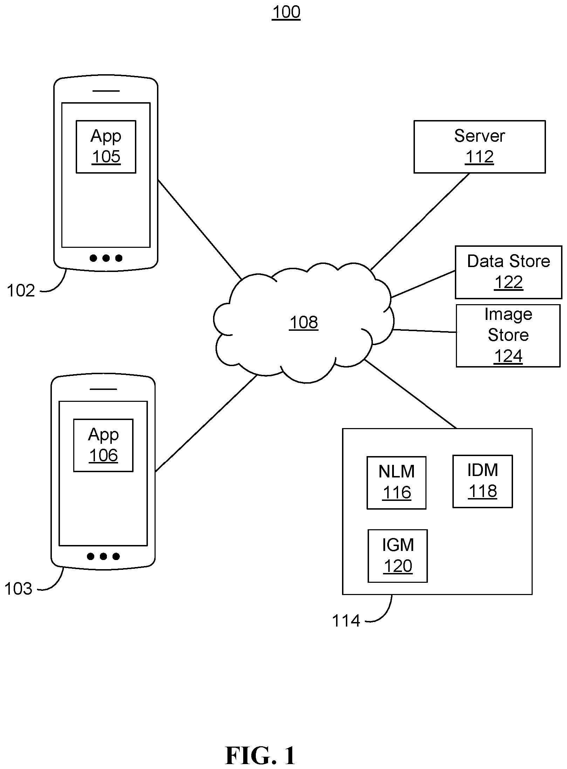

FIG. 1 illustrates an example system 100 for implementing the disclosed subject matter. System 100 may include user device 102, user device 103, server 112, artificial intelligence (Al) processing system 114, data store 122, or image model store 124 connected via a network 108. The messaging server 112 may connect with AI processing system 114, in which AI processing system 114 may incorporate a natural language processing module 116, an intent detection module 118, or an image generation module 120. The AI processing system 114 accesses a training data store 122 and an image model store 124. User device 102 may be a smartphone, tablet, laptop computer, or other device, which may allow for text, voice, or other communication. It is contemplated that components herein may be physical or functional components.

User device 102 may include messaging application 105. When media is captured using this application 105. In an example, messaging application 105 may be a standalone app or integrated into a social media platform app. The messaging application 105 or messaging application 106 may provide user interfaces for text-based communication or media content display. Messaging application 105 may be associated with a first user profile and messaging application 106 may be associated with a second user profile. It is contemplated that the capabilities or components of user device 103 and messaging application 106 may be similar to or the same as user device 102 and messaging application 105, respectively.

Messaging server 112 may manage the functionality of the messaging service, including message routing, user authentication, or conversation persistence. Messaging server 112 also may serve as the interface between the messaging clients and the AI processing system 114.

AI processing system 114 may include some components that enable the contextual image generation and manipulation features. The natural language processing module (NLM) 116 may analyze incoming text messages to understand their semantic content and context. Intent detection module (IDM) 118 may use this analysis to determine when input associated with a user profile (e.g., text, image, or gestures) express an intent (explicitly or implicitly) to generate or manipulate images. Image generation module (IGM) 120 may create, modify, or animate images based on the detected intents, which may be associated with textual descriptions.

Training data store 122 may include datasets used to train the various AI models employed by system 100. This may include conversational data, image-text paired data, or labeled intent data, among other things. The image model store 124 may include the trained image generation or manipulation models used by the system.

To improve performance or user experience, system 100 may incorporate one or more optimization techniques as further disclosed herein. A first technique may include using progressive image loading, in which generated images are initially transmitted as low-resolution previews and refined as higher-quality versions are processed. This may provide rapid initial display, reducing wait times while the full-quality image is rendered in the background. Another technique may include predictive pre-generation, where the system analyzes ongoing conversations to anticipate potential image generation requests. By pre-generating likely image candidates in the background, perceived response time is reduced when users request specific visuals.

The system may use adaptive model selection technique, dynamically choosing appropriate image generation models based on factors including conversation context, user preferences, or current system load. This may allow for efficient resource management while ensuring relevant output. A distributed caching technique may improve performance by storing frequently used image elements and generation results across system 100, allowing for quick retrieval in cases of similar or repeated requests.

For the user interface of messaging application 105, there may be suggestion bubbles that appear within the conversation interface when an opportunity for image generation arises. These suggestion bubbles may allow users to trigger the creation of visuals without interrupting their typing or conversational flow. Generated images may be displayed within an interactive canvas, enabling direct manipulation through gestures such as pinch-to-zoom or swipe-to-pan. Modifications may be requested or suggested through these gestures.

System 100 may keep a visual history in data store 122, preserving generated and modified images so users may revert to earlier versions or explore alternative branches of image development. In group conversations of a group chat session, the interface may support collaborative image refinement by offering mechanisms for multiple participants to contribute, including voting systems and layer-based editing options. Personal style presets may be defined and stored for a user profile, which may be applied to generated images to quickly implement preferred visual aesthetics. These features may create a flexible and user-centric system that may assist with technical performance and creative potential of the image generation process.

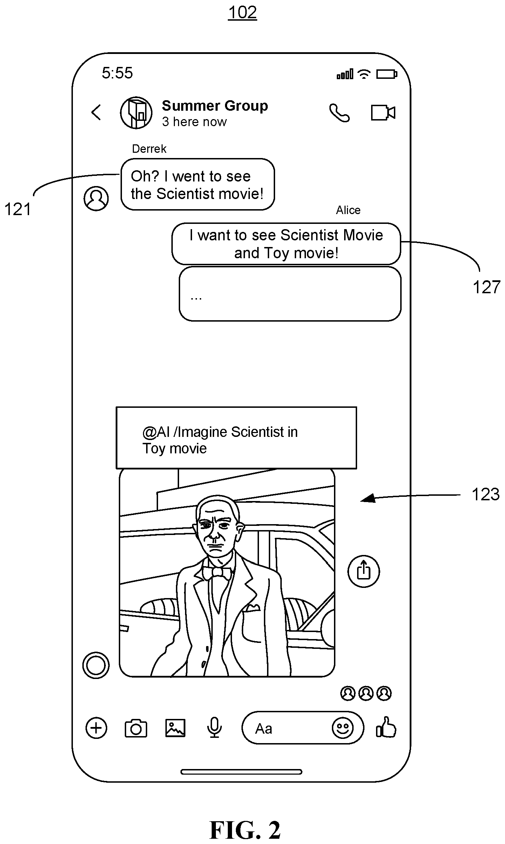

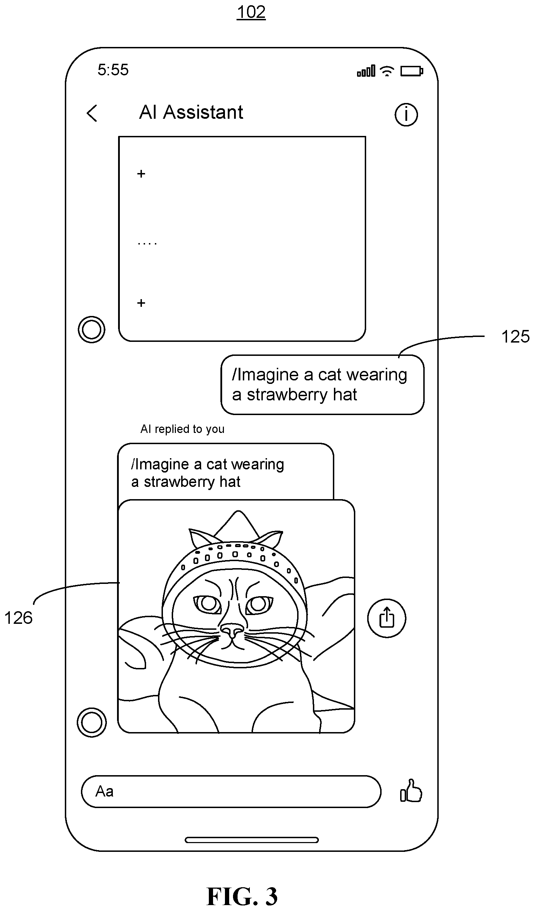

FIG. 2 illustrates an exemplary application interface on user device 102 associated with the disclosed subject matter. In an example, Derrek (e.g., a second user profile associated with user device 103) and Alice (e.g., a first user profile associated with user device 102) are in a group chat session. Derrek at block 121 sends a message via messaging application 106 that he may like to see a movie called Scientist, while at block 127, Alice communicates she may like to see Scientist movie and Toy movie. An AI assistant (e.g., AI chat bot) may be part of the group chat session and may generate and display media content 123 (e.g., image or video) associated with the exchange of Derrek and Alice. As further described herein, media content 123 may be generated based on explicit instructions (e.g., command "@AI/ /Imagine a cat wearing a strawberry hat" in FIG. 3) or implicit instructions (e.g., inferring from a conversation as shown in FIG. 2). FIG. 3 illustrates an exemplary application interface on user device 102 associated with the disclosed subject matter. As shown, block 125 includes the command "/Imagine a cat wearing a strawberry hat" and a media content 126 is generated and displayed.

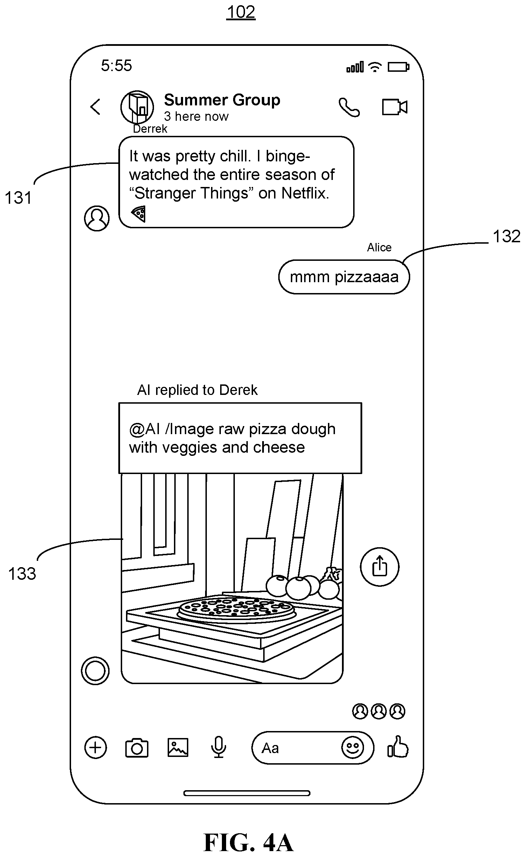

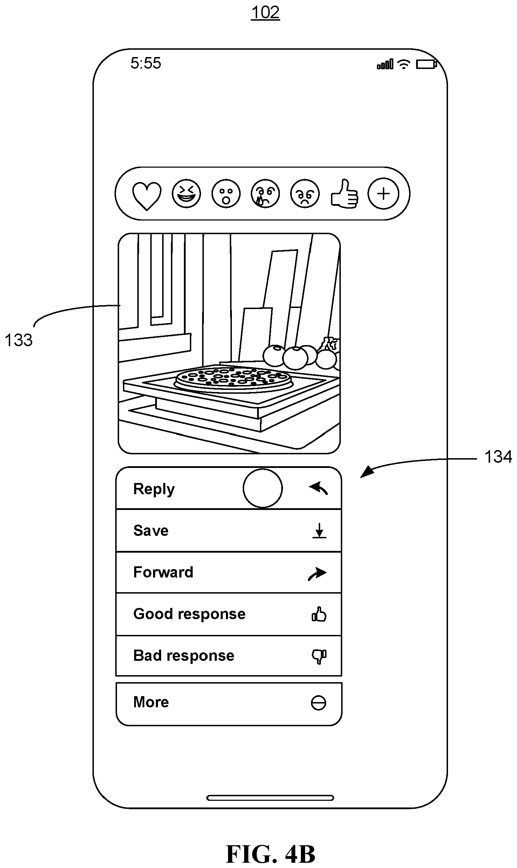

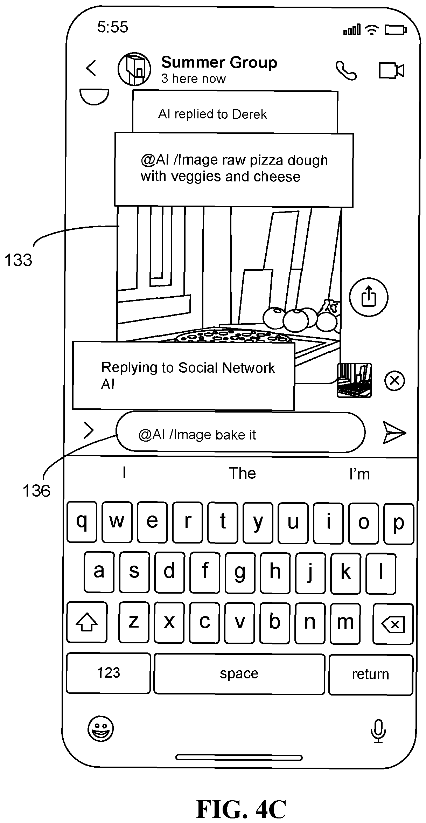

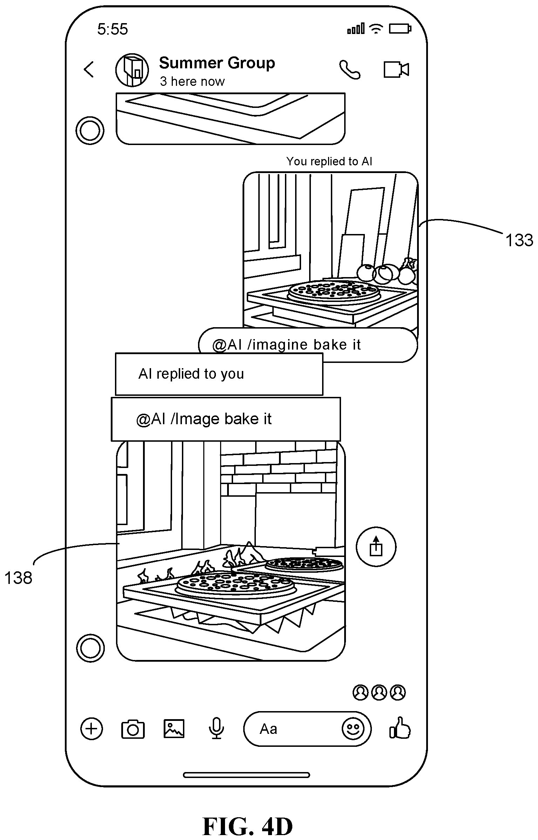

FIG. 4A - FIG. 4C illustrate an example application interface on user device 102 associated with the disclosed subject matter. In an example, as shown in FIG. 4A, Derrek and Alice are in a group chat session with an AI assistant. Derrek at block 131 mentions that he watched movies and ate pizza (pizza emoji), while at block 132, Alice communicates how good pizza may taste. The AI assistant generate and display media content 133 (e.g., image or video) associated with the exchange of Derrek and Alice. Media content 133 happens to be an image of a baked pizza with veggies and cheese, which may be based on preferences or other information provided in a current or previous chat session. As further described herein, media content 133 may be generated based on explicit instructions or implicit instructions (e.g., inferring from current or previous conversations or preferences). In FIG. 4B, Alice or Derreck may be able to further manipulate, share, or comment on media content 133 with one or more commands associated with messaging application 105 (e.g., using one or more options of menu 134). In FIG. 4C, Derreck attempts further manipulates media content 133 with one or more commands as shown inn text block 136 associated with messaging application 105 (e.g., @AI /Image bake it). In FIG. 4D, an image associated with a baked pizza is shown based on the command in text block 136.

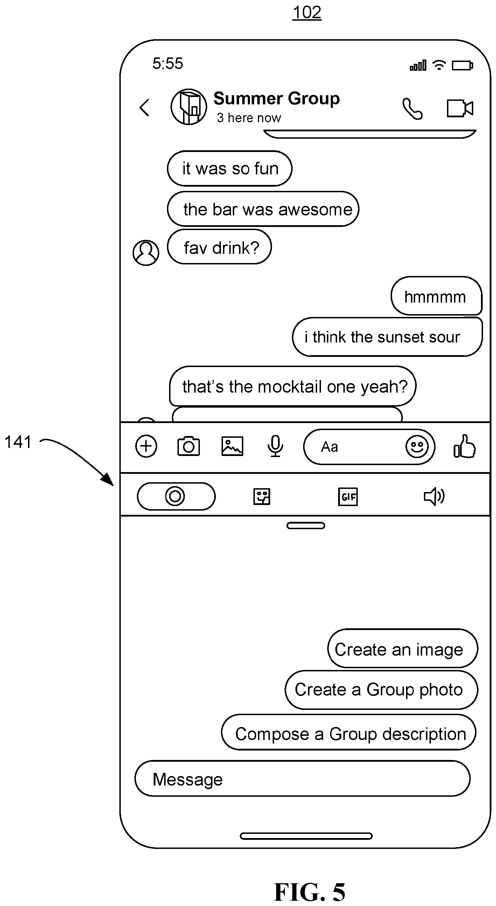

FIG. 5 illustrates an example user interface of a messaging application 105 of user device 102 implementing contextual image generation. The bottom interface 141 may be presented based on detected intent of creating media content (e.g., implicit or explicit) and presents example options for Al-assisted content creation, including "Create an image," "Create a Group photo," and "Compose a Group description." Bottom interface 141 seamless integration of Al-generated visual content into the conversation flow.

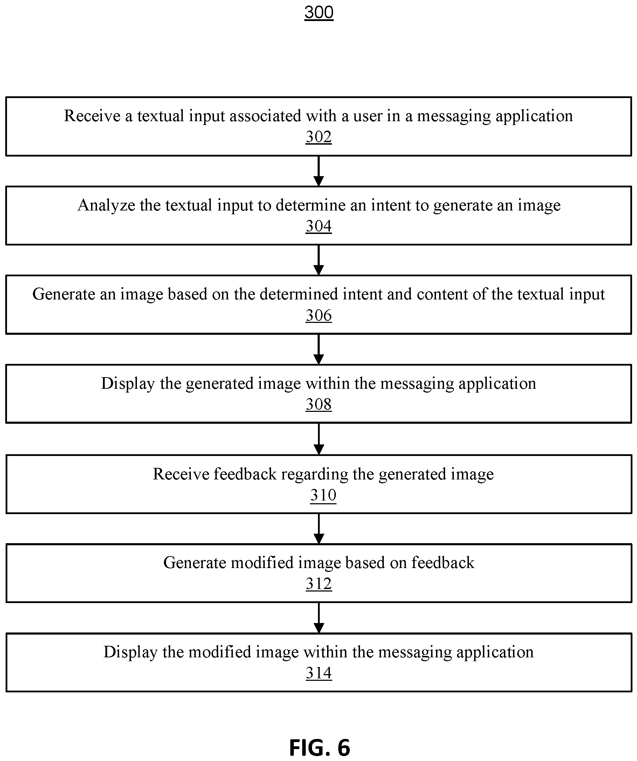

FIG. 6 illustrates an example method 300 for generating media content based on conversational context in messaging applications. At step 302 input (e.g., text or voice) associated with a user profile in a messaging application may be received. This input may be part of an ongoing conversation between multiple group members in a group chat session, such as a first user profile associated with user device 102 (e.g., messaging application 105), a second user profile associated with user device 103 (e.g., messaging application 106), or an AI assistant.

At step 304, the input may be analyzed to determine an intent to generate media content (e.g., image or animation). This analysis may go beyond simple keyword matching and may leverage natural language processing techniques to understand the conversational context and intent communicated by the input. The intent detection process may consider factors such as presence of terms related to visual concepts or media content creation, analysis of preceding messages in the conversation, historical patterns associated with a user profile of requesting or engaging with visual content, or current conversation topic and emotional tone. This intent detection process may be used to infer when media content generation may enhance the communication without requiring an explicit command (e.g., explicit text input to "create an image"). For example, if a hypothetical scenario or a fantastical creature is described in the messaging application 105, there may be a determination that generating a visual representation may add value to the conversation.

When an intent associated with media content generation is detected, the method may proceed to step 306, where a media content may be generated based on the determined intent and content of the input. This determination may be based on meeting a threshold confidence score. The media content generation process may utilize one or more AI models capable of creating diverse media content from descriptions. Depending on the specific intent and content, multiple specialized media content generation models optimized for different types of output (e.g., photorealistic scenes, cartoon-style illustrations, or abstract art) may be used.

At step 308, the generated media content may be displayed within the messaging application. The media content may be inserted directly into the conversation thread or presented as a suggestion to approve before sharing in the group chat session, which may depend on the confidence level of the intent detection and preferences.

Step 310 may involve receiving feedback or additional input associated with one or more user profiles regarding the generated media content. This may include requests for modifications (e.g., color or style), animations, or entirely new media content based on the initial output.

At step 312, the feedback or additional input may be processed, which may generate modified or new media content. This step enables an iterative, conversation-driven approach to visual content creation.

At step 314, modified or new media content may be displayed within the messaging application, continuing the visual conversation.

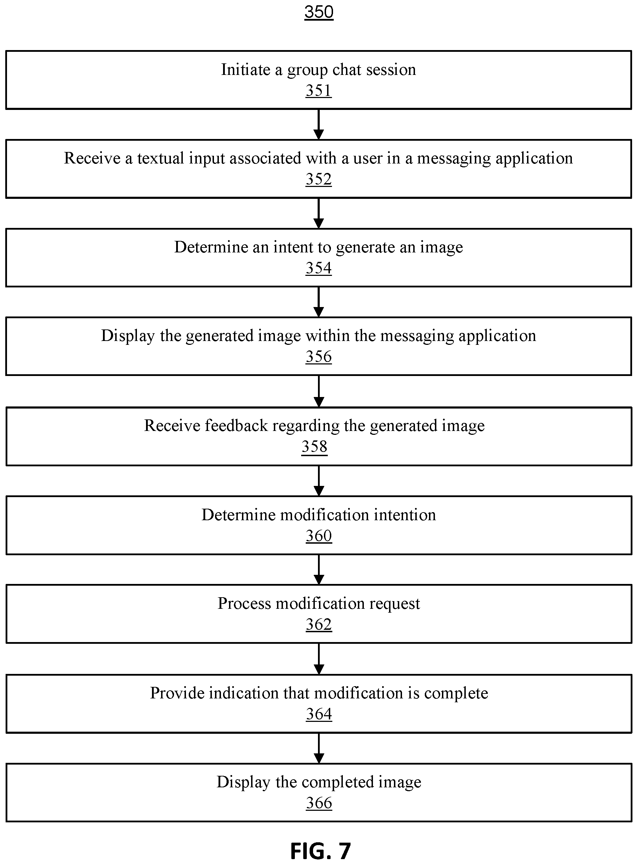

FIG. 7 illustrates an example method 350 for collaborative media content generation and manipulation in a group chat session. At step 351, a group chat session may be initiated within a messaging application. This group chat session involves multiple user profiles (e.g., a first user profile, second user profile, and AI assistant), which may be connected through a network, using one or more types of computing devices, such as smartphones, tablets, or computers. At step 352, textual input may be received from a first user profile in the group chat session. This textual input may include a general message, a description of media content, or an explicit request to generate media content.

At step 354, an intent to generate media content may be determined. The received textual input may be analyzed (e.g., using natural language processing techniques) to determine if there exists an intent to generate media content. This analysis may consider the content of the message, the context of the conversation, or any explicit commands or keywords.

At step 356, based on the content of the textual input and the determined intent, an initial media content may be generated (e.g., displayed). This generation process may utilize one or more artificial intelligence models selected based on the specific requirements of the media content description. The generated media content may be displayed within the group chat interface. In addition, a notification may be sent to the members of the group chat session, alerting them to the newly generated media content and inviting collaboration.

At step 358, feedback may be received from one or more group members regarding the generated media content. The feedback may include textual comments, suggested modifications, or reactions. At step 360, the feedback from one or more group members is determined to have specific modification intents (e.g., requests) of the media content. The modification intents may include requests to change colors, add or remove elements, adjust styles, or create animations. For animations, an animated sequence (e.g., required type of motion or transformation) may be created based on the current media content and the animation request. The modification intents may be queued in preparation for processing. The queue may be ordered based on factors such as the time of request, the requesting user's permissions, or the defined (e.g., threshold level) complexity of the modification.

At step 362, the queued modification requests of the media content are processed. An appropriate AI model or technique may be selected to perform the modification based on the nature of the modification request. A preview of the modified media content may be displayed in the group chat session. Feedback may be collected from one or more group members on each proposed modification. This feedback may include approval votes, further suggestions, or requests to revert changes.

At step 364, based on the collected feedback, an indication that the modification of the media content is completed may be provided. Modifications that receive positive feedback may be applied, while those with negative feedback may be reverted or further refined. At step 366, displaying the completed media content. Upon completion, the drawing layer may be merged with the main media content (e.g., image) or kept as a separate overlay, depending on preferences. A version history of the finalized media content may be maintained in which each significant modification may be recorded. This version history may allow one or more group members to review the evolution of the media content (e.g., still image to animation to modified animation) and potentially revert to earlier versions. One or more group members may be allowed to create branches from a point in the version history of the finalized media content, which may enable exploration of different creative directions based on the same initial media content. In an example, to summarize the collaboration process, a history of edits and contributions may be complied, a visual timeline of the media content's evolution may be generated, and the collaboration summary may be displayed in the group chat session, which may include an acknowledgement of contributors.

The function disclosed herein may be understood through practical examples that demonstrate the features in real-world contexts. The following example scenarios show how the system may operate in a natural manner, incorporating visual elements into conversations and supporting collaborative, dynamic image creation.

In a first example of implicit image generation, a first user profile may discuss travel, expressing a desire to visit a tropical beach, mentioning features such as "crystal clear water and palm trees." Without an explicit command, one or more devices of system 100 may interpret the descriptive content of the statement, recognizing its potential for visualization. One or more devices of system 100 may generate an image based on the user's description and may present it as a suggestion: "I've created an image based on your description. Would you like to add it to the conversation?" This process shows how the disclosed subject matter may enhance a discussion by introducing visual elements without disrupting the conversational flow.

Another example shows iterative refinement capability. An initial image may be generated that depicts a futuristic city skyline. Subsequently, a request may include, "That looks great, but can we make it nighttime with lots of neon lights?" The one or more devices of system 100 may process this request, adjusting the lighting and incorporating neon elements into the existing image. This demonstrates the ability to execute complex image modifications based on natural language input, providing users with a fluid visual creation process.

In a collaborative context, there may be support of group storytelling, as shown by a group chat session where users are creating a fantasy narrative. One participant describes a magical forest, prompting the system to generate an image. Another user suggests, "Let's add a unicorn drinking from a sparkling stream," and the system updates the image accordingly. A third user then requests, "Now make the unicorn's mane flow as if there's a gentle breeze." This example underscores the system's ability to facilitate collaborative visual storytelling, where multiple users may contribute to and refine a shared creation.

The disclosed subject matter may enable animated responses, as shown in a conversation about pets. After one user generates an image of a playful dog, another participant remarks, "It would be cute if the dog was wagging its tail!" The system may interpret this as a request for animation, producing a short sequence of the dog wagging its tail. This dynamic feature expands the expressive potential of conversations by allowing users to introduce animated visuals in response to textual cues.

These examples collectively highlight the ability of the system to interpret natural language, generate and modify images, facilitate collaborative communication, or facilitate multimodal communication.

The disclosed subject matter offers several distinct technical effects. First, the disclosed subject matter allows for the integration of image generation capabilities within messaging platforms. This may enable users (e.g., user device 102) to create and share custom visual content while maintaining their conversations, without switching to separate applications. The system may analyze ongoing conversation context, allowing it to interpret image generation intents based on previous exchanges. This contextual understanding may simplify interactions by allowing users to express their visual ideas naturally, without learning specific commands or following strict syntax.

The disclosed subject matter may also facilitate collaborative image creation. Multiple participants in a conversation may contribute to and refine the visual output, fostering creativity and enhancing group communication. Real-time iterative feedback may allow users to modify and improve generated images through natural language inputs, which may enable efficient exploration of visual concepts.

The disclosed subject matter may enhance the usability and creative potential of messaging applications, providing a more intuitive and collaborative experience. The usefulness of contextual image generation may extend beyond casual communication, providing considerable value for professional and educational applications. In educational settings, instructors and students may generate illustrative visuals during discussions, aiding the understanding of complex topics. This functionality enhances learning experiences by incorporating visual aids directly into ongoing conversations.

Design professionals may use the disclosed subject matter for quick prototyping and iteration of visual concepts within the communication platform. This process may remove the need to switch between different tools, allowing more efficient development and refinement of ideas. Marketing teams may also use the system to collaboratively generate and visualize campaign strategies while remaining in the messaging platform, encouraging creativity and speeding up the ideation process.

In customer support scenarios, representatives may use the system to create custom explanatory visuals tailored to specific client inquiries. This capability improves the clarity of technical support and product-related guidance, enhancing customer experience and reducing resolution time. The disclosed subject matter may function as a versatile tool that expands its utility across various professional and educational fields, improving efficiency and creativity in visual communication.

Methods, systems, or apparatus with regard to contextual media content (e.g., image) generation in messaging applications are disclosed herein. A method, system, or apparatus may provide for receiving a textual input associated with a user in a messaging application; analyzing the textual input to determine an intent to generate an image; generating an image based on the determined intent and content of the textual input; and displaying the generated image within the messaging application. Analyzing the textual input may include detecting one or more keywords associated with image generation or evaluating a conversation history between the user and an AI assistant. The intent to generate an image may be determined without an explicit command from the user to generate an image.

The method may further include receiving a subsequent textual input related to modifying the generated image; generating a modified image based on the subsequent textual input; and displaying the modified image within the messaging application. Modifying the generated image may include changing one or more visual attributes of the generated image. The method may also include receiving a subsequent textual input related to animating the generated image; generating an animated version of the generated image based on the subsequent textual input; and displaying the animated version within the messaging application. Generating the image may be performed using one of multiple image generation models selected based on the determined intent. Prior to displaying the generated image, the method may include providing a suggestion to the user to generate an image based on the conversation and receiving user approval to generate and display the image.

The textual input may be received in a group chat session, and the generated image may be displayed to multiple users in the group chat. Analyzing the textual input to determine the intent to generate an image may be performed using a natural language processing model trained on a dataset of text prompts labeled as image generation intents or non-image generation intents. The messaging application may support multiple modalities of Al-generated content, and analyzing the textual input may include determining which modality of Al-generated content to produce. All combinations (including the removal or addition of steps) in this paragraph and the above paragraphs are contemplated in a manner that is consistent with the other portions of the detailed description.

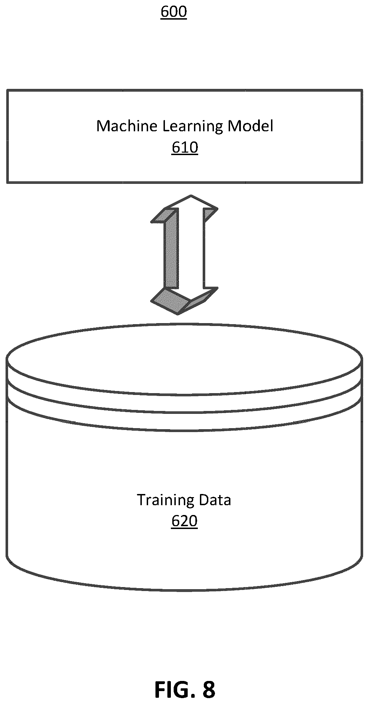

FIG. 8 illustrates a framework 600 associated with machine learning or artificial intelligence (Al). The framework 600 may be hosted remotely. Alternatively, the framework 600 may reside within the system 100 shown in FIG. 1 and may be implemented by one or more devices. In some examples, the machine learning model 610 (also referred to herein as artificial intelligence model 610) may be implemented/executed by a network device (e.g., server 112). In other examples, the machine learning model 610 may be implemented/executed by other devices (e.g., user device 102 or user device 103). The machine learning model 610 may be operably coupled with the stored training data in a training database 603 (e.g., data store 122 or image model store 124). In some examples, the machine learning model 610 may be associated with other operations. The machine learning model 610 may be one or more machine learning models.

In another example, the training data 620 may include attributes of thousands of objects. Attributes may include but are not limited to the size, shape, orientation, position of the object(s), etc. The training data 620 employed by the machine learning model 610 may be fixed or updated periodically. Alternatively, the training data 620 may be updated in real-time based upon the evaluations performed by the machine learning model 610 in a non-training mode. This is illustrated by the double-sided arrow connecting the machine learning model 610 and stored training data 620.

The machine learning model 610 may be designed to generate one or more sections of a media content (e.g., an image) associated with one or more received inputs, based in part on utilizing determined contextual information. This information includes fields like a description, variables defined, data category associated with the variables and the output (e.g., media content), and responses to generated prompts. The machine learning model 610 may be a large language model to generate representations, or embeddings, of one or more of the one or more inputs received. These machine learning model 610 may be trained (e.g., pretrained and/or trained in real-time) on a vast amount of textual data (e.g., associated with the one or more inputs), previous responses to one or more prompts generated, previously generated media content, or data capture of a wide range of language patterns and semantic meanings. The machine learning model 610 may understand and represent the context of words, terms, phrases and/or the like in a high-dimensional space, effectively capturing or determining the semantic similarities between different received inputs, including descriptions and responses to prompts, even when they are not exactly the same.

Typically, such determinations by some existing systems may require a large quantity of manual annotation(s) and/or brute force computer-based annotation to obtain the training data in a supervised training framework. However, example aspects of the present disclosure may deploy a machine learning model(s) (e.g., machine learning model 610) that may be flexible, adaptive, automated, temporal, learns quickly and trainable. Manual operations or brute force device operations may be unnecessary for the examples of the present disclosure due to the learning framework aspects of the present disclosure that are implementable by the machine learning model 610. As such, this enables one or more user inputs, requests for media content to assist with one or more problems, or other aspects of the examples of the present disclosure to be flexible and scalable.

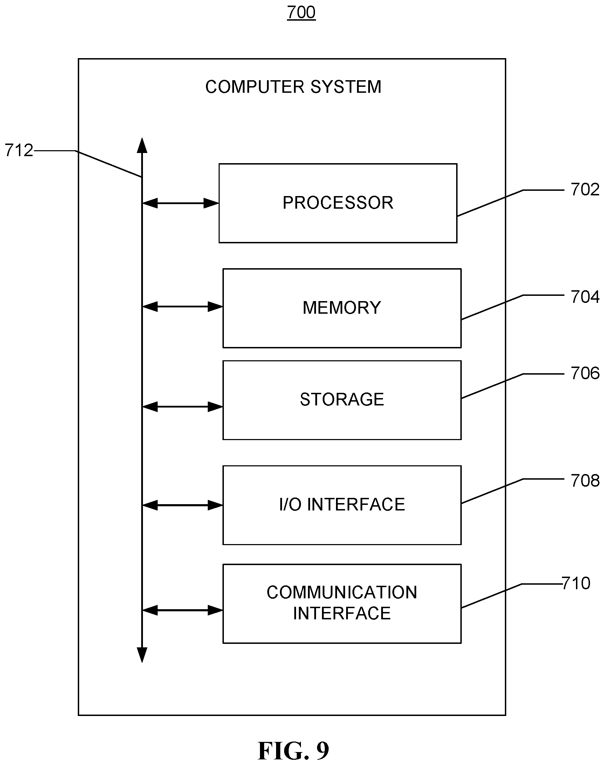

FIG. 9 illustrates an example computer system 700. In examples, one or more computer systems 700 perform one or more steps of one or more methods described or illustrated herein. In particular examples, one or more computer systems 700 provide functionality described or illustrated herein. In examples, software running on one or more computer systems 700 performs one or more steps of one or more methods described or illustrated herein or provides functionality described or illustrated herein. Examples include one or more portions of one or more computer systems 700. Herein, reference to a computer system may encompass a computing device, and vice versa, where appropriate. Moreover, reference to a computer system may encompass one or more computer systems, where appropriate.

This disclosure contemplates any suitable number of computer systems 700. This disclosure contemplates computer system 700 taking any suitable physical form. As example and not by way of limitation, computer system 700 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 700 may include one or more computer systems 700; be unitary or distributed; span multiple locations; span multiple machines; span multiple data centers; or reside in a cloud, which may include one or more cloud components in one or more networks. Where appropriate, one or more computer systems 700 may perform without substantial spatial or temporal limitation one or more steps of one or more methods described or illustrated herein. As an example, and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In examples, computer system 700 includes a processor 702, memory 704, storage 706, an input/output (I/O) interface 708, a communication interface 710, and a bus 712. Although this disclosure describes and illustrates a particular computer system having a particular number of particular components in a particular arrangement, this disclosure contemplates any suitable computer system having any suitable number of any suitable components in any suitable arrangement.

In examples, processor 702 includes hardware for executing instructions, such as those making up a computer program. As an example, and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular examples, processor 702 may include one or more internal caches for data, instructions, or addresses. This disclosure contemplates processor 702 including any suitable number of any suitable internal caches, where appropriate. As an example, and not by way of limitation, processor 702 may include one or more instruction caches, one or more data caches, and one or more translation lookaside buffers (TLBs). Instructions in the instruction caches may be copies of instructions in memory 704 or storage 706, and the instruction caches may speed up retrieval of those instructions by processor 702. Data in the data caches may be copies of data in memory 704 or storage 706 for instructions executing at processor 702 to operate on; the results of previous instructions executed at processor 702 for access by subsequent instructions executing at processor 702 or for writing to memory 704 or storage 706; or other suitable data. The data caches may speed up read or write operations by processor 702. The TLBs may speed up virtual-address translation for processor 702. In particular examples, processor 702 may include one or more internal registers for data, instructions, or addresses. This disclosure contemplates processor 702 including any suitable number of any suitable internal registers, where appropriate. Where appropriate, processor 702 may include one or more arithmetic logic units (ALUs); be a multi-core processor; or include one or more processors 702. Although this disclosure describes and illustrates a particular processor, this disclosure contemplates any suitable processor.

In examples, memory 704 includes main memory for storing instructions for processor 702 to execute or data for processor 702 to operate on. As an example, and not by way of limitation, computer system 700 may load instructions from storage 706 or another source (such as, for example, another computer system 700) to memory 704. Processor 702 may then load the instructions from memory 704 to an internal register or internal cache. To execute the instructions, processor 702 may retrieve the instructions from the internal register or internal cache and decode them. During or after execution of the instructions, processor 702 may write one or more results (which may be intermediate or final results) to the internal register or internal cache. Processor 702 may then write one or more of those results to memory 704. In particular examples, processor 702 executes only instructions in one or more internal registers or internal caches or in memory 704 (as opposed to storage 706 or elsewhere) and operates only on data in one or more internal registers or internal caches or in memory 704 (as opposed to storage 706 or elsewhere). One or more memory buses (which may each include an address bus and a data bus) may couple processor 702 to memory 704. Bus 712 may include one or more memory buses, as described below. In examples, one or more memory management units (MMUs) reside between processor 702 and memory 704 and facilitate accesses to memory 704 requested by processor 702. In particular examples, memory 704 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 704 may include one or more memories 704, where appropriate. Although this disclosure describes and illustrates particular memory, this disclosure contemplates any suitable memory.

In examples, storage 706 includes mass storage for data or instructions. As an example, and not by way of limitation, storage 706 may include a hard disk drive (HDD), a floppy disk drive, flash memory, an optical disc, a magneto-optical disc, magnetic tape, or a Universal Serial Bus (USB) drive or a combination of two or more of these. Storage 706 may include removable or non-removable (or fixed) media, where appropriate. Storage 706 may be internal or external to computer system 700, where appropriate. In examples, storage 706 is non-volatile, solid-state memory. In particular examples, storage 706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 706 taking any suitable physical form. Storage 706 may include one or more storage control units facilitating communication between processor 702 and storage 706, where appropriate. Where appropriate, storage 706 may include one or more storages 706. Although this disclosure describes and illustrates particular storage, this disclosure contemplates any suitable storage.

In examples, I/O interface 708 includes hardware, software, or both, providing one or more interfaces for communication between computer system 700 and one or more I/O devices. Computer system 700 may include one or more of these I/O devices, where appropriate. One or more of these I/O devices may enable communication between a person and computer system 700. As an example, and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 708 for them. Where appropriate, I/O interface 708 may include one or more device or software drivers enabling processor 702 to drive one or more of these I/O devices. I/O interface 708 may include one or more I/O interfaces 708, where appropriate. Although this disclosure describes and illustrates a particular I/O interface, this disclosure contemplates any suitable I/O interface.

In examples, communication interface 710 includes hardware, software, or both providing one or more interfaces for communication (such as, for example, packet-based communication) between computer system 700 and one or more other computer systems 700 or one or more networks. As an example, and not by way of limitation, communication interface 710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 710 for it. As an example, and not by way of limitation, computer system 700 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 700 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 700 may include any suitable communication interface 710 for any of these networks, where appropriate. Communication interface 710 may include one or more communication interfaces 710, where appropriate. Although this disclosure describes and illustrates a particular communication interface, this disclosure contemplates any suitable communication interface.

In particular examples, bus 712 includes hardware, software, or both coupling components of computer system 700 to each other. As an example and not by way of limitation, bus 712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 712 may include one or more buses 712, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, computer readable medium or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

While the disclosed systems have been described in connection with the various examples of the various figures, it is to be understood that other similar implementations may be used or modifications and additions may be made to the described examples of a robotic skin or AI robotics platform, among other things as disclosed herein. For example, one skilled in the art will recognize that robotic skin or AI robotics platform, among other things as disclosed herein in the instant application may apply to any environment, whether wired or wireless, and may be applied to any number of such devices connected via a communications network and interacting across the network. Therefore, the disclosed systems as described herein should not be limited to any single example, but rather should be construed in breadth and scope in accordance with the appended claims.

In describing preferred methods, systems, or apparatuses of the subject matter of the present disclosure - masking high security messages on companion devices - as illustrated in the Figures, specific terminology is employed for the sake of clarity. The claimed subject matter, however, is not intended to be limited to the specific terminology so selected.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only and is not intended to be limiting.

This written description uses examples to enable any person skilled in the art to practice the claimed subject matter, including making and using any devices or systems and performing any incorporated methods. Other variations of the examples are contemplated herein. It is to be appreciated that certain features of the disclosed subject matter which are, for clarity, described herein in the context of separate examples, may also be provided in combination in a single example. Conversely, various features of the disclosed subject matter that are, for brevity, described in the context of a single example, may also be provided separately or in any sub-combination. Further, any reference to values stated in ranges includes each and every value within that range. Any documents cited herein are incorporated herein by reference in their entireties for any and all purposes.

The scope of this disclosure encompasses all changes, substitutions, variations, alterations, and modifications to the examples described or illustrated herein that a person having ordinary skill in the art would comprehend. The scope of this disclosure is not limited to the examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

## Claims

1. A method comprising:
receiving a textual input associated with a user profile in a messaging application;
analyzing the textual input to determine an intent to generate media content;
generating the media content based on the determined intent and content of the textual input; and
displaying the generated media content within the messaging application.

2. The method of claim 1, wherein the analyzing of the textual input comprises evaluating a conversation history between the user profile and an artificial intelligence assistant.

3. The method of claim 1 or 2, wherein the intent to generate the media content is determined without an explicit command from the user to generate the media content.

4. The method of any preceding claim, wherein the analyzing of the textual input comprises determining one or more keywords associated with media content generation.

5. The method of any preceding claim, further comprising:
receiving a subsequent textual input associated with animating the generated media content;
generating an animated version of the generated media content based on the subsequent textual input; and
displaying the animated version within the messaging application.

6. The method of claim 5, further comprising:
modifying of the generated media content based on changing one or more visual attributes of the generated media content.

7. The method of any preceding claim, further comprising:
receiving a subsequent textual input associated with modifying the generated media content;
generating a modified media content based on the subsequent textual input; and
displaying the modified media content within the messaging application.

8. The method of any preceding claim, wherein generating of the media content is performed using one or more multiple media content generation models selected based on the determined intent.

9. The method of any preceding claim, further comprising:
prior to the displaying the generated media content, providing one or more suggestion messages that indicates a suggestion to generate media content based on the textual input in the messaging application; and
receiving user approval to generate and display the media content.

10. The method of claim 9, wherein the user approval comprises receiving two or more votes to approve.

11. The method of any preceding claim, wherein the textual input is received in a group chat session, and wherein the generated media content is displayed to multiple users in the group chat session.

12. An apparatus comprising:
one or more processors; and
at least one memory storing instructions, that when executed by the one or more processors, cause the apparatus to carry out the method of any preceding claim.

13. A computer-readable medium storing instructions that, when executed by a processor, cause the processor to carry out the method of any of claims 1 to 11.

14. A computer program product comprising instructions which, when the program is executed by a computer, cause the computer to carry out the method of any of claims 1 to 11.
